# EUROPEAN PATENT APPLICATION

(11) **EP 1 643 770 A2**
(43) Date of publication of application: **05.04.2006**
(21) Application number: 05021626.6
(22) Date of filing: 04.10.2005
(51) Int. Cl.: H04N 7/16, H04N 5/00, H04H 1/00

(54) **Method and apparatus for searching for a digital broadcasting program**

(30) Priority: 04.10.2004 KR 2004078651
(71) Applicant: Samsung Electronics Co., Ltd., Yeongtong-gu Suwon-si, Gyeonggi-do (KR)
(72) Inventor: Kwon, Seong-Geun, Yeongtong-gu Suwon-si Gyeonggi-do (KR); Park, Chang-Sul, Yeongtong-gu Suwon-si Gyeonggi-do (KR)
(74) Representative: Lang, Johannes

(57) **Abstract**

A method and apparatus for searching for a digital broadcasting program. A user inputs search information to search for a predetermined digital broadcasting program. When the search information is input, at least one digital broadcasting program corresponding to the search information and broadcasting program information thereof are detected from a guide data for digital broadcasting programs. A list of the at least one detected digital broadcasting program and the detected broadcasting program information are stored in a memory. When the search is completed, the stored list of the at least one detected digital broadcasting program and the stored detected broadcasting program information are displayed.

## Description

### BACKGROUND OF THE INVENTION

### 1. Field of the Invention

The present invention relates generally to a digital broadcasting receiver, and more particularly to a method and apparatus for searching for a digital broadcasting program.

### 2. Description of the Related Art

Conventionally, digital broadcasting, that is, Digital Multimedia Broadcasting (DMB), serves to provide a high quality video service using digital data. The interest on a digital broadcasting service through which users can view and listen to digital broadcasting in a wireless and mobile device has recently increased according to the development of digital broadcasting technology and mobile communication technology. More specifically, the interest in digital broadcasting services using a mobile communication terminal is increasing.

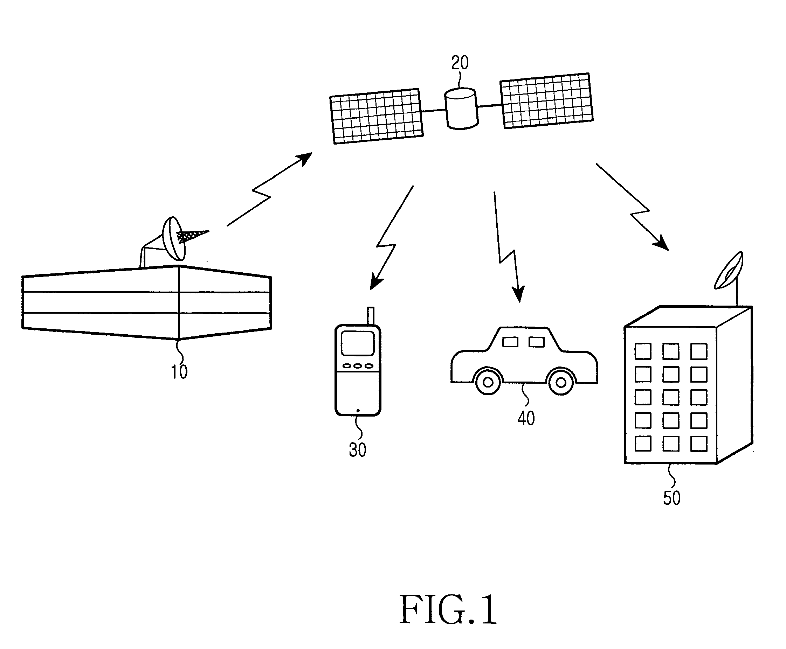

FIG. 1 illustrates a system for implementing a digital broadcasting service.

The system includes a data transmission center 10, a satellite 20, and receivers, for example, a mobile communication terminal 30, a receiver 40 for vehicle use, and a receiver 50 for home or office use.

The data transmission center 10 compresses and modulates digital broadcasting data (e.g., image, voice, and data signals, etc.), and then transmits the compressed and modulated digital broadcasting data to the satellite 20. The satellite 20 receives and amplifies a signal from the data transmission center 10, and frequency- converts the signal to transmit the converted signal to the receivers. The receivers 30, 40 and 50 receive the signal from the satellite 20, and demodulate and decompress the received signal to recover and output an original signal.

One of the advantages of the digital broadcasting service is that it has better channel efficiency as compared with the analog broadcasting service. While only one program is broadcast through one physical channel in the analog broadcasting, in a digital broadcasting service system a plurality of programs can be simultaneously broadcast through one physical channel. Accordingly, the digital broadcasting service can provide an increased number of programs. Therefore, a need exists for providing program information such that viewers can select a desired program. One existing service for providing the program information is an Electronic Program Guide (EPG) service.

The EPG service provides information on the types of broadcasting programs currently provided to users, broadcasting channels, and broadcasting start and end times of the broadcasting programs. This information generally is referred to as "guide data for digital broadcasting programs".

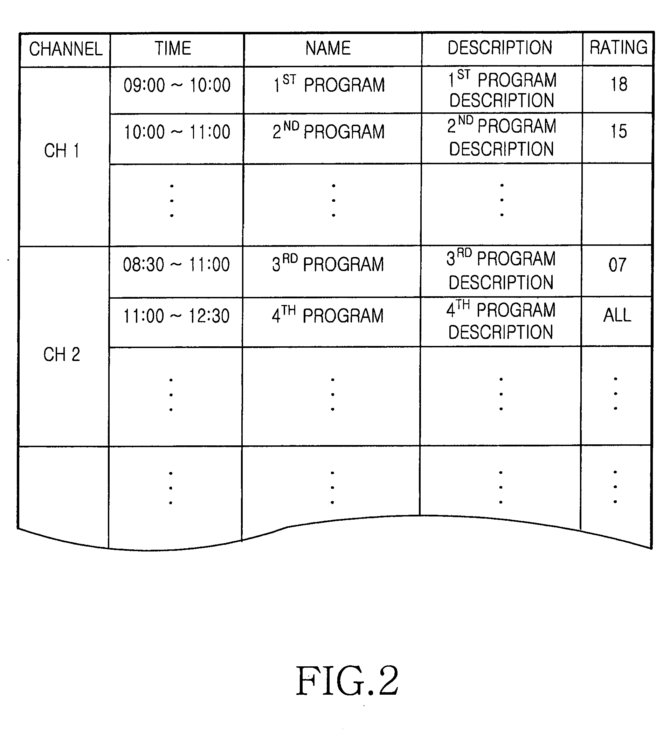

FIG. 2 is a table illustrating an example of the guide data stored in the digital broadcasting receiver.

The guide data includes channel and program information at specific time slots, for example, program names, program descriptions, parental ratings, etc.

For example, assuming that a user has selected Channel (CH) 1 as illustrated in the table, the digital broadcasting receiver detects the names of the programs (including a 1^{st} program, a 2^{nd} program, etc.) to be broadcast during their time slots (including 09:00 ~ 10:00, 10:00 ~ 11:00, etc.), program descriptions (including a 1^{st} program description, a 2^{nd} program description, etc.), and ratings (including 18, 15, etc.), from the guide data, and outputs a result of the detection, such that broadcasting program information corresponding to CH 1 is provided to the digital broadcasting viewers.

Conventionally, the guide data is provided in a predetermined cycle or whenever the guide data is updated.

Accordingly, the receivers 30, 40, and 50 illustrated in FIG. 1 receive and internally store the guide data, generate digital broadcasting program information from the guide data in response to a user request, and provide the generated information to the user. Alternatively, the receivers 30, 40, and 50 receive the guide data in response to a user request, generate the digital broadcasting program information, and provide the generated information to the user.

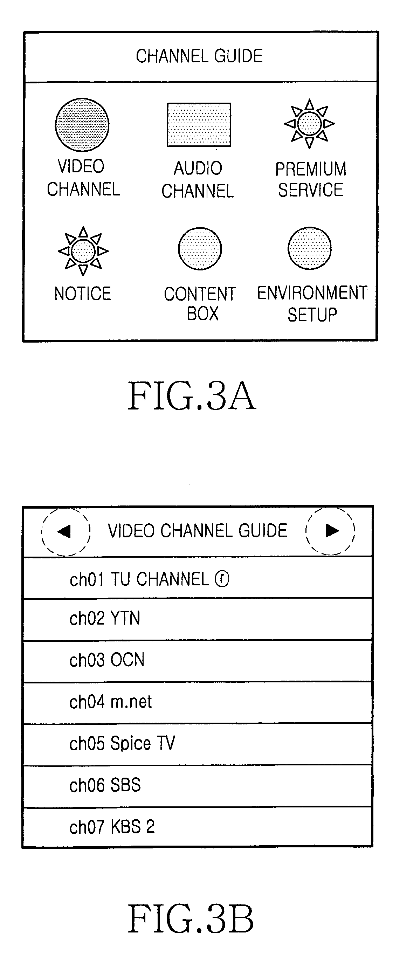

FIGS. 3A to 3D are examples illustrating a conventional method for searching for digital broadcasting program information. FIGS. 3A to 3D illustrate screen displays through which the user can search for broadcasting programs.

FIG. 3A is an example of an initial screen for a channel guide, and FIG. 3B is an example of a screen display when the user has selected "Video channel" on the screen of FIG. 3A.

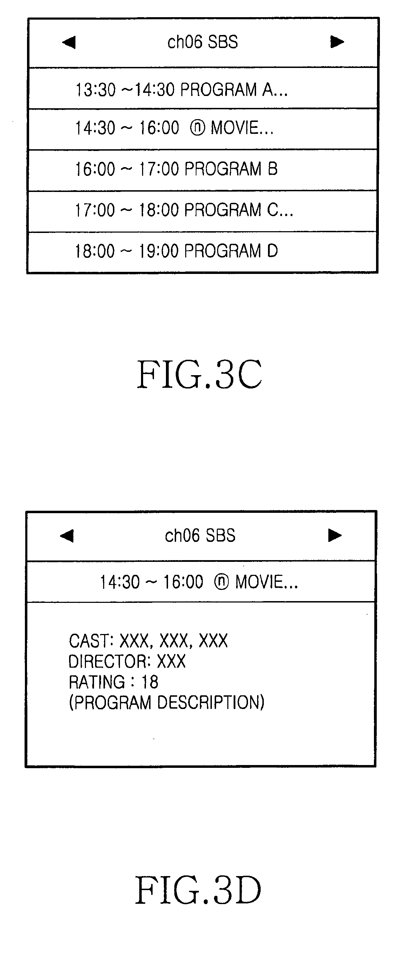

FIG. 3C is an example of a screen when the user has selected "ch06" on the screen of FIG. 3B, and FIG. 3D is an example of a screen for displaying a program description (e.g., Cast, Director, Rating, etc.) when the user has selected "Movie" on the screen of FIG. 3C.

It is predicted that the number of broadcasting channels capable of being viewed and listened to by users will increase to several hundreds in the near future. In this case, there is a problem in that the users must examine broadcasting program lists associated with 200 to 300 channels on a one-by-one basis from the digital broadcasting program information generated through the guide data for digital broadcasting programs when searching for desired broadcasting program information.

### SUMMARY OF THE INVENTION

Accordingly, the present invention has been designed to solve at least the above and other problems occurring in the prior art. Therefore, it is an object of the present invention to provide a method and apparatus for simplifying the digital broadcasting program guide for a user.

It is another object of the present invention to provide a method and apparatus for simplifying a digital broadcasting program guide that can be conveniently used by users.

In accordance with an aspect of the present invention, the above and other objects can be accomplished by a method for searching for a digital broadcasting program. The method includes receiving search criteria input from a user to search for a predetermined digital broadcasting program; detecting, from guide data for digital broadcasting programs, at least one digital broadcasting program corresponding to the search criteria and broadcasting program information thereof on a channel basis by channel when the search criteria is input, and storing a list of the at least one detected digital broadcasting program and the detected broadcasting program information in a memory; and displaying the stored list of the at least one detected digital broadcasting program and the stored detected broadcasting program information on a channel-by-channel, when all of the guide data has been searched.

In accordance with another aspect of the present invention, the above and other objects can be accomplished by an apparatus for searching for a digital broadcasting program. The apparatus includes a data reception unit for receiving digital broadcasting data and guide data for digital broadcasting programs; a display unit for displaying the received digital broadcasting data and the received guide data; an interface unit for receiving a search criteria for digital broadcasting program information; a detection unit for detecting, from the guide data, at least one digital broadcasting program corresponding to the search criteria and broadcasting program information thereof on a channel-by-channel basis, when the search information is input; a memory for storing a list of the at least one detected digital broadcasting program and the detected broadcasting program information; and a control unit for controlling the overall operation of the apparatus and controlling the display unit to display the stored list of the at least one detected digital broadcasting program and the stored detected broadcasting program information on a channel-by-channel basis, when all of the guide data has been searched.

### BRIEF DESCRIPTION OF THE DRAWINGS

The above and other objects, features and other advantages of the present invention will be more clearly understood from the following detailed description taken in conjunction with the accompanying drawings, in which:
FIG. 1 illustrates a system for implementing a digital broadcasting service;
FIG. 2 is a table illustrating an example of the guide data stored in the digital broadcasting receiver;
FIGS. 3A to 3D are examples illustrating a conventional method for searching for digital broadcasting program information;
FIG. 4 is a block diagram illustrating a digital broadcasting receiver in accordance with an embodiment of the present invention;
FIG. 5 is a flow chart illustrating the operation of a digital broadcasting receiver in accordance with an embodiment of the present invention; and
FIGS. 6A and 6B are examples illustrating screens displays for searched digital broadcasting program information in accordance with an embodiment of the present invention.

### DETAILED DESCRIPTION OF THE PREFERRED EMBODIMENTS

Embodiments of the present invention will be described in detail herein below with reference to the accompanying drawings. In the following description, a detailed description of known functions and configurations incorporated herein will be omitted for conciseness.

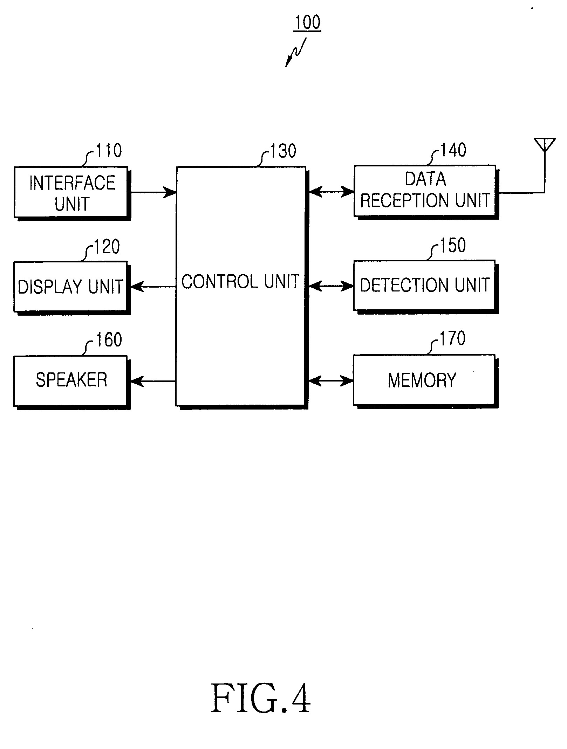

FIG. 4 is a block diagram illustrating a digital broadcasting receiver in accordance with an embodiment of the present invention.

Referring to FIG. 4, a digital broadcasting receiver 100 includes an interface unit 110, a display unit 120, a control unit 130, a data reception unit 140, a detection unit 150, a speaker 160, and a memory 170.

The interface unit 110 transfers, to the control unit 130, a signal corresponding to an external command. The interface unit 110 receives a user manipulation signal such as a key input, etc. The user manipulation signal can be information for controlling the control unit 130, or user selection information.

The display unit 120 can be a Liquid Crystal Display (LCD), etc. The display unit 120 displays digital broadcasting data and guide data for digital broadcasting programs received by the data reception unit 140 according to a control operation of the control unit 130. A user can select a desired broadcasting program through the interface unit 110 after viewing the displayed guide data.

The control unit 130 controls the overall operation of the digital broadcasting receiver 100 in accordance with the embodiment of the present invention.

When a user inputs search criteria through the interface unit 110 to search for digital broadcasting program information from the guide data, the control unit 130 controls the detection unit 150 to detect at least one broadcasting program corresponding to the search criteria and broadcasting program information thereof on a channel-by-channel basis, and controls the memory 170 to store a list of the detected digital broadcasting programs and the detected broadcasting program information.

The search criteria may be a broadcasting start time or a broadcasting program name. The broadcasting program information can include a broadcasting program name, a channel number, broadcasting start and end times, summary information of a broadcasting program, etc.

The data reception unit 140 receives the digital broadcasting data and the guide data, and then transfers the received data to the control unit 130. The guide data is provided to the digital broadcasting receiver 100 in a predetermined cycle or whenever the guide data is updated.

When the search criteria is input according to the user request, the detection unit 150 detects, from the guide data, digital broadcasting programs corresponding to the search criteria and broadcasting program information thereof on a channel-by-channel basis. The memory 170 stores a list of the digital broadcasting programs and the broadcasting program information detected by the detection unit 150 according to a control operation of the control unit 130.

When the detection unit 150 detects digital broadcasting programs corresponding to the search criteria and broadcasting program information thereof on a channel-by-channel basis, the control unit 130 controls the display unit 120 to display a list of the channel-by-channel broadcasting programs and the broadcasting program information thereof stored in the memory 170, when all of the guide data has been searched.

The speaker 160 outputs audio data of the digital broadcasting data received by the data reception unit 110 according to a control operation of the control unit 130. At this point, the control unit 130 can control the speaker 160 to audibly output the guide data.

The memory 170 stores the programming necessary for the overall control and operation of the digital broadcasting receiver 100. More specifically, the memory 180 stores the guide data received by the data reception unit 110, and stores a list of the broadcasting programs and the broadcasting program information thereof detected by the detection unit 150 according to a control operation of the control unit 130.

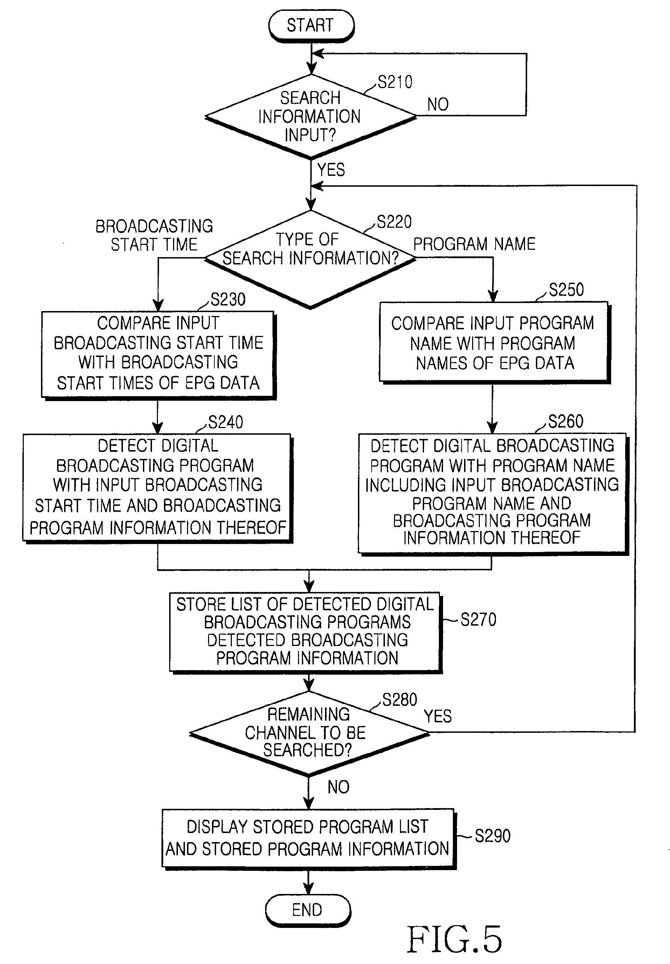

FIG. 5 is a flow chart illustrating the operations of the digital broadcasting receiver in accordance with an embodiment of the present invention.
Referring to FIGS. 4 and 5, the control unit 130 determines if the user has input search criteria to search for a digital broadcasting program (Step S210). The search criteria input to search for the digital broadcasting program may be a broadcasting start time or a broadcasting program name associated with the digital broadcasting program that the user desires to search for.

When the search information has been input, the control unit 130 determines if the input search criteria is a broadcasting start time or a broadcasting program name (Step S220).

If the input search information is a broadcasting start time, the control unit 130 compares the input broadcasting start time with broadcasting start times included in the broadcasting program information of the guide data (Step S230). At this point, it is preferred that the control unit 130 sequentially compares the input broadcasting start time with the broadcasting start times included in the broadcasting program information of Channels 1 to N, when digital broadcasting channels are Channels 1 to N.

It is preferred that the control unit 130 uses Event Information Table (EIT) information from among Network Information Table (NIT), Broadcaster Information Table (BIT), and Service Description Table (SDT) information, and the EIT information serving as table information configuring the guide data.

The NIT includes satellite information and a network name. The BIT is used to transmit broadcaster information including a notice, a broadcaster name, a current channel list, etc. The SDT is used to transmit channel information including a channel name, a broadcaster name, channel Uniform Resource Locator (URL) information, channel type information, etc. The EIT includes program information containing a channel number, a program name, URL information, broadcasting time information, a brief description associated with each program, etc.

Accordingly, it is preferred that the control unit 130 compares the input broadcasting start time with broadcasting start times included in the broadcasting program information to detect a corresponding broadcasting program and broadcasting program information thereof, using the EIT information including broadcasting time information of a predetermined broadcasting program.

More specifically, when the user has input the broadcasting start time, the control unit 130 compares the input broadcasting start time with start time values included in the EIT information. When a predetermined broadcasting program with a start time value equal to the input broadcasting start time is present, the control unit 130 controls the detection unit 150 to search for a service Identification (ID) value and detect a channel number.

Subsequently, the control unit 130 controls the detection unit 150 to detect a program name and a brief program description from a short event descriptor representing short character information on an event name and an event. The control unit 130 controls the detection unit 150 to detect an item name and an item description from an extended event descriptor representing detailed character information on an event. The item name and the item description can be referred to as detailed information of a detected program.

When a digital broadcasting program corresponding to the input broadcasting start time is present, the control unit 130 controls the detection unit 150 to detect corresponding digital broadcasting programs and broadcasting program information (Step S240).

The broadcasting program information includes a program name, a channel number, broadcasting start and end times, and summary information (i.e. brief description) associated with each digital broadcasting program.

The control unit 130 stores a list of the detected digital broadcasting programs and the broadcasting program information in the memory 170 (Step S270).

The control unit 130 determines if there are any remaining broadcasting channel to be searched (Step S280).

If there is another broadcasting channel to be searched, the control unit 130 returns to step S220 and controls the detection unit 150 to repeat an operation for detecting a digital broadcasting program corresponding to the search information (e.g., the broadcasting start time) and broadcasting program information thereof.

If there are no more broadcasting channels to be searched, the control unit 130 controls the display unit 120 to display digital broadcasting programs corresponding to the search information (e.g., the broadcasting start time) and broadcasting program information thereof stored in the memory 170 and to provide the user with the displayed information (Step S290).

When the search information input in step S220 is a predetermined program name, the control unit 130 compares the input program name with program names included in the broadcasting information of the guide data (Step S250).

At this point, it is preferred that the control unit 130 uses the EIT information from among the NIT, BIT, SDT, and EIT information serving as table information configuring the guide data to perform step S250 similar to step S230.

If a digital broadcasting program with a program name including or equal to the input program name is present as a result of the comparison, the control unit 130 controls the detection unit 150 to detect corresponding digital broadcasting programs and broadcasting program information thereof on a channel-by-channel basis (Step S260).

When the user has input a program name, the control unit 130 compares the input program name with a program name included in a short event descriptor representing short character information on an event name and an event included in the EIT information. Subsequently, when the input program name is included in or equal to a program name, included in the short event descriptor, the control unit 130 controls the detection unit 150 to detect a brief description of text characters on a corresponding program from the short event descriptor.

The control unit 130 searches for a service ID value to detect a channel number, and searches for a start time value and a duration value to detect time information, that is, broadcasting start and end times and a broadcasting time period.

The control unit 130 controls the detection unit 150 to detect an item name and an item description from an extended event descriptor representing detailed character information on an event.

For example, when the input program name is "Term A", the detection unit 150 can detect a digital broadcasting program with a program name including or equal to "Term A" of the input program name according to a control operation of the control unit 130.

Subsequently, the control unit 130 stores a list of detected digital broadcasting programs and broadcasting program information thereof in the memory 170 (Step S270).

The control unit 130 determines if there are any further broadcasting channel to be searched (Step S280). If there is a broadcasting channel to be searched, the control unit 130 returns to step S220 and controls the detection unit 150 to repeat an operation for detecting a digital broadcasting program corresponding to the search information (e.g., the broadcasting program name) and broadcasting program information thereof.

If there are no further broadcasting channels to be searched, the control unit 130 controls the display unit 120 to display digital broadcasting programs corresponding to the search criteria (e.g., the broadcasting program name) and broadcasting program information thereof stored in the memory 170 and to provide the user with the displayed information (Step S290).

In accordance with the embodiments of the present invention, the user can effectively search for and receive a desired digital broadcasting program. Convenience for the user can be maximized because the user can easily search for a desired digital broadcasting program.

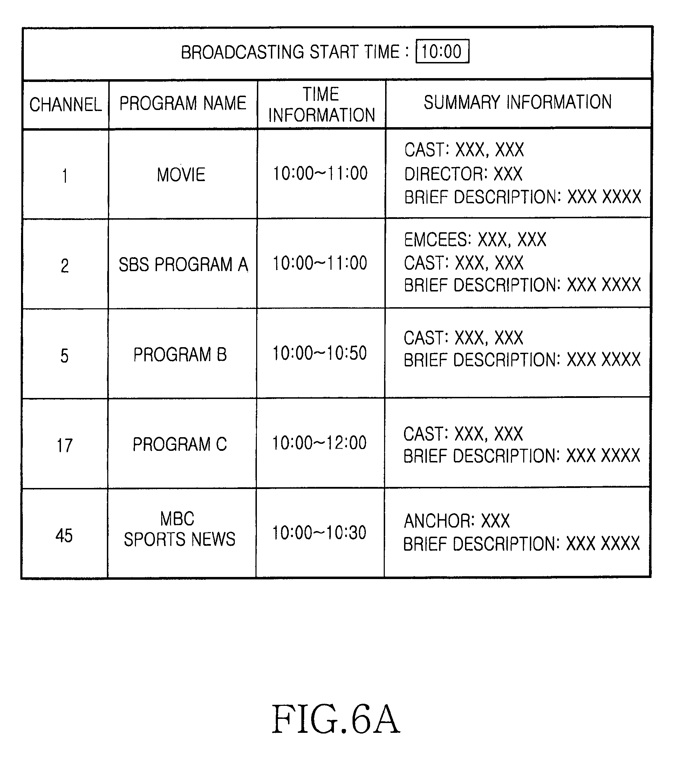

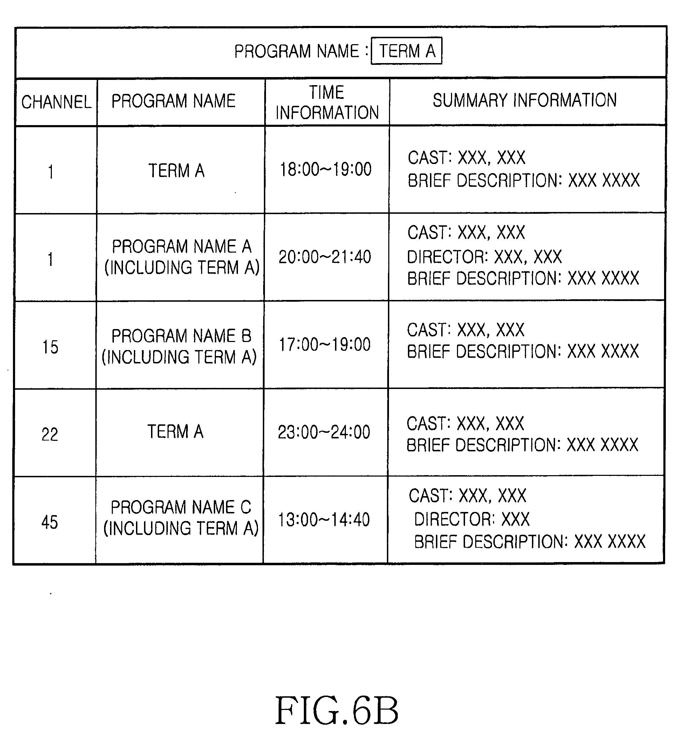

FIGS. 6A and 6B are examples of screen displays in accordance with an embodiment of the present invention.

The screen display of FIG. 6A displays channel numbers, program names, broadcasting time information, and summary information of digital broadcasting programs with a broadcasting start time of "10:00".

FIG. 6A illustrates the screen for displaying channel-by-channel digital broadcasting programs corresponding to the search criteria (e.g., the broadcasting start time) input by the user, and broadcasting program information thereof, detected by the detection unit 150 according to a control operation of the control unit 130.

For example, when the user inputs the broadcasting start time of "10:00" to search for digital broadcasting programs with the broadcasting start time of "10:00", the control unit 130 controls the detection unit 150 to detect, from the guide data, the digital broadcasting programs with the broadcasting start time of "10:00" and broadcasting program information thereof. The control unit 130 controls the memory 170 to store a list of the detected digital broadcasting programs and the detected broadcasting program information.

When there is no further information to be searched, the control unit 130 controls the display unit 120 to display on a channel-by-channel basis the digital broadcasting programs and broadcasting program information thereof stored in the memory 170 as illustrated in FIG. 6A.

FIG. 6B illustrates a screen for displaying channel numbers, program names, broadcasting time information, and summary information associated with digital broadcasting programs with a program name including "Term A".

FIG. 6B illustrates the screen for displaying on a channel-by-channel basis the digital broadcasting programs corresponding to the search information (e.g., the broadcasting program name) input by the user, and the broadcasting program information thereof, detected by the detection unit 150 according to a control operation of the control unit 130.

For example, when the user inputs the broadcasting program name of "Term A" to search for digital broadcasting programs with the broadcasting program name of "Term A", the control unit 130 controls the detection unit 150 to detect, from the guide data, the digital broadcasting programs with a program name including or equal to "Term A", and broadcasting program information thereof on a channel-by-channel basis. The control unit 130 controls the memory 170 to store a list of the detected digital broadcasting programs and the detected broadcasting program information.

At this point, it is preferred that the detection unit 150 uses the EIT information of the guide data during the detection process, from the guide data, the digital broadcasting programs with a program name including or equal to "Term A" and broadcasting program information thereof as mentioned above. When there is not further guide data to be searched, the control unit 130 controls the display unit 120 to display on a channel-by-channel basis the digital broadcasting programs and broadcasting program information thereof stored in the memory 170 as illustrated in FIG. 6B.

Although a digital broadcasting receiver in accordance with a certain embodiment of the present invention has been described, the present invention can be applied to any mobile communication terminal capable of receiving digital broadcasting. Various modifications, additions and substitutions are possible, without departing from the scope of the present invention. Therefore, the present invention is not limited to the above-described embodiments, but is defined by the following claims, along with their full scope of equivalents.

In accordance with the present invention, the user can easily and effectively search for and receive a desired digital broadcasting program. The present invention can maximize convenience for the user because the user can easily and effectively search for a desired digital broadcasting program.

## Claims

1. A method for searching guide data digital broadcasting programs, comprising the steps of:
receiving search information input by a user to search the guide data;
detecting, from the guide data of the digital broadcasting programs, at least one digital broadcasting program corresponding to the search information and broadcasting program information associated therewith, when the search information is input, and storing a list of the at least one detected digital broadcasting program and the detected broadcasting program information in a memory; and
displaying the stored list of the at least one detected digital broadcasting program and the stored detected broadcasting program information channel by channel, when there is no further guide data to search.

2. The method according to claim 1, wherein the search information is at least one of a broadcasting start time and a broadcasting program name associated with the at least one digital broadcasting program that a user desires to search for.

3. The method according to claim 1, wherein the broadcasting program information includes a program name, a channel number, broadcasting start and end times, and summary information associated with the at least one digital broadcasting program.

4. The method according to claim 1, wherein the storing step further comprises the steps of:
comparing an input broadcasting start time with broadcasting start times included in the broadcasting program information of the guide data, when the broadcasting start time is input as the search information according to a user request; and
detecting the at least one digital broadcasting program with the input broadcasting start time and the broadcasting program information associated therewith, when the at least one digital broadcasting program with the input broadcasting start time is present.

5. The method according to claim 1, wherein the storing step further comprises the steps of:
comparing an input broadcasting program name with broadcasting program names included in the broadcasting program information of the guide data, when a predetermined broadcasting program name is input as the search information according to a user request; and
detecting the at least one digital broadcasting program with a program name including the input broadcasting program name and the broadcasting program information associated therewith, when the at least one digital broadcasting program including the input broadcasting program name is present.

6. An apparatus for searching guide data of digital broadcasting programs, comprising:
a data reception unit for receiving digital broadcasting data and guide data of digital broadcasting programs;
a display unit for displaying the received digital broadcasting data and the received guide data;
an interface unit for receiving search information from a user;
a detection unit for detecting, from the guide data, at least one digital broadcasting program corresponding to the search information and broadcasting program information thereof associated therewith, when the search information is input;
a memory for storing a list of the at least one detected digital broadcasting program and the detected broadcasting program information; and
a control unit for controlling the overall operation of the apparatus and controlling the display unit to display the stored list of the at least one detected digital broadcasting program and the stored detected broadcasting program information channel by channel, when there is no further guide data to be searched.

7. The apparatus according to claim 6, wherein the search information is at least one of a broadcasting start time and a broadcasting program name associated with the at least one digital broadcasting program that a user desires to search for.

8. The apparatus according to claim 6, wherein the broadcasting program information includes a program name, a channel number, broadcasting start and end times, and summary information associated with the at least one digital broadcasting program.

9. The apparatus according to claim 6, wherein the detection unit detects, from the guide data, the at least one digital broadcasting program with an input broadcasting start time and the broadcasting program information associated therewith according to a control operation of the control unit, when the broadcasting start time is input as the search information according to a user request.

10. The apparatus according to claim 6, wherein the detection unit detects, from the guide data, the at least one digital broadcasting program with a program name including an input broadcasting program name and the broadcasting program information associated therewith according to a control operation of the control unit, when a broadcasting program name is input as the search information according to a user request.
